Europäisches Patentamt

European Patent Office

Office européen des brevets

(19)

(11) Veröffentlichungsnummer: **0 288 595**
**A1**

(12) # EUROPÄISCHE PATENTANMELDUNG

(21) Anmeldenummer: 87106370.7

(22) Anmeldetag: 30.04.87

(51) Int. Cl.⁴: **B32B 27/08** , **B65D 1/02**

(43) Veröffentlichungstag der Anmeldung:
**02.11.88 Patentblatt 88/44**

(84) Benannte Vertragsstaaten:
**AT BE CH DE FR GB IT LI LU NL SE**

(71) Anmelder: **PLM-RAKU GmbH**
**Im Wöhr 2**
**D-7550 Rastatt(DE)**

(72) Erfinder: **Tritsch, Gerhard**
**Kolpingstr. 3**
**D-7555 Bietigheim(DE)**

(74) Vertreter: **Koepsell, Helmut, Dipl.-Ing.**
**Mittelstrasse 7**
**D-5000 Köln 1(DE)**

(54) **Mehrschichtiger Behälter aus Kunststoff.**

(57) Die Erfindung betrifft einen im Koextruions-Blas-verfahren hergestellten mehrschichtigen Behälter aus Kunststoff mit einer aus Polypropylen bestehen-den Innenschicht (10) sowie einer über eine Haftvermittlerschicht (12) mit der Polypropylen-schicht verbundenen Barriereschicht (14) aus EVOH (Ethylenvinylalkohol), die mit einer äußeren Schicht aus Polyamid (15) direkt verbunden ist.

FIG.2

EP 0 288 595 A1

## Mehrschichtiger Behälter aus Kunststoff

Die Erfindung betrifft einen im Koextrusions-Blasverfahren hergestellten mehrschichtigen Behälter, der eine innere Schicht aus einem Polyolefin aufweist, die außenseitig über eine Haftvermittlerschicht mit einer Barriereschicht aus EVOH verbunden ist.

Bekannte derartige, im allgemeinen flaschenartige Behälter werden für Lebensmittel, z. B. Ketch-up, verwendet. Die äußere Sperrschicht dieser bekannten Behälter verhindert das Diffundieren von Medien durch die Flaschenwandung, so daß im Füllgut beispielsweise befindliche Aromastoffe nicht in nennenswertem Umfang nach außen diffundieren können. Umgekehrt dient diese Schicht auch in vielen Fällen dem Schutz des Füllgutes gegen äußere Einflüsse, da sie beispielsweise das Diffundieren von Luftsauerstoff durch die Fla-schenwandung in das Innere der Flasche hinein verhindert. Die Haftvermittlerschicht ist erforderlich, da Polypropylen sich nicht mit dem die Sperrschicht bildenden Material verbindet. Die Polyolefinschicht dient im wesentlichen dazu, der Flasche die notwendige mechanische Festigkeit und Steifigkeit zu geben.

Wenngleich Flaschen der vorbeschriebenen Art bezüglich Festigkeit und auch Dichtigkeit den an sie gestellten Anforderungen genügen, weisen sie bestimmte Nachteile jedenfalls dann auf, wenn sie für Füllgüter verwendet werden, die heiß abgefüllt werden müssen. Das die Sperrschicht bildende EVOH (Ethylenvinylalkohol) erweicht bereits bei relativ niedrigen Temperaturen, so daß bei nicht ausreichender Abkühlung beim Verpacken unmittelbar im Anschluß an den Abfüllvorgang die Gefahr besteht, daß die Flaschen zusammenkleben. Außerdem beulen diese Flaschen bei Heißabfüllung ziemlich stark aus, was ebenfalls zu Schwierigkeiten, insbesondere beim Etikettieren und Abpacken der Flaschen, führen kann. Außerdem ist das die Sperrschicht bildende EVOH relativ feuchtigkeitsempfindlich. Es weist zudem eine relativ geringe mechanische Festigkeit auf, so daß die Sperrschicht eventuell beschädigt werden kann.

Es sind auch Behälter bekannt, die mit einer inneren Schicht aus einem Polyolefin, einer Haftvermittlerschicht und einer Schicht aus EVOH versehen und in gleicher Weise aufgebaut sind wie die vorbeschriebenen Behälter, wobei die EVOH-Schicht jedoch außenseitig mit einer weiteren Schicht aus einem Polyolefin versehen ist, die mit der EVOH-Schicht unter Zwischenschaltung einer weiteren Haftvermittler-Schicht verbunden ist. Die Nachteile der erstbeschriebenen bekannten Behälter werden hier vermieden, da die äußere Schicht aus einem Polyolefin als Schutzschicht für die EVOH-Schicht dient, so daß das Erweichen der letztgenannten Schicht bei Heißabfüllung keine nachteiligen Folgen hat. Jedoch ist dieser Behälter relativ teuer, da er aus insgesamt fünf Schichten besteht. Zudem hat das Vorhandensein der äußeren Schicht aus einem Polyolefin den Nachteil, daß der Behälter einen geringen Oberflächenglanz aufweist. Dies wird bei Flaschen und ähnlichen Behältern, die zum Abfüllen von Lebensmitteln verwendet werden, im allgemeinen als nachteilig empfunden, da ein ansehnliches Äußeres der Verpackung in vielen Fällen für den Kaufentschluß des Konsumenten von Bedeutung ist. Außerdem ist die Steifigkeit dieser aus fünf Schichten bestehenden Flasche aufgrund des Vorhandenseins von zwei Haftvermittlerschichten relativ gering, so daß auch hier unter Ums en starke Ausbeulung auftritt. Die beiden äußeren Schichten aus Haftvermittler und Polyolefin tragen zudem zur Diffusionsdichte der Flaschen kaum bei.

Der Erfindung liegt demzufolge die Aufgabe zugrunde, einen Behälter der einleitend beschriebenen Art so abzuwandeln, daß die Nachteile bekannter Behälter vermieden werden. Die Eigenschaften der dreischichtigen Flasche sollen verbessert werden, ohne daß dazu jedoch ein zusätzlicher Aufwand erforderlich ist, der die Wirtschaftlichkeit in Frage stellt. Außerdem soll die Flasche ein ansprechendes Äußeres aufweisen, ohne daß dazu Maßnahmen notwendig wären, die über das hinausgehen, was zur angestrebten Verbesserung der mechanischen Eigenschaften ohnehin erforderlich ist.

Zur Lösung dieser Aufgabe schlägt die Erfindung vor, daß die EVOH-Schicht außenseitig mit einer Schicht aus Polyamid versehen ist, die direkt, also ohne Zwischenschaltung einer Haftvermittlerschicht, mit der EVOH-Schicht verbunden ist.

Gegenüber der bekannten dreischichtigen Flasche weist der Behälter gemäß der Erfindung den Vorteil einer merklich größeren Wärmestandfestigkeit auf. D. h., daß bei Heißabfüllen die Flasche weniger ausbeult und auch die Gefahr des Anklebens der Flaschen aneinander nicht besteht. Diese Vorteile wiegen den Nachteil des Vorhandenseins einer vierten Schicht auf, zumal die zusätzliche Polyamidschicht zur Verbesserung der Diffusionsdichte der Wandung erheblich beiträgt. Die Polyamidschicht bewirkt zudem eine höhere Steifigkeit, so daß ggf. der durch das Vorhandensein der vierten, aus Polyamid bestehenden Schicht er-forderliche zusätzliche Aufwand zumindest teilwei-se ausgeglichen werden kann durch eine entsprechende Verringerung der Dicke der Polyolefinschicht. Ferner wird im Vergleich zur dreischich igen Flasche mechanischer Schutz für die EVOH-Schicht erreicht, die sowohlgegen mechanische Beanspruchung als auch gegen Einwirkung von Feuchtigkeit relativ empfindlich ist.

Im Vergleich zum bekannten fünfschichtigen Behälter weist der Behälter gemäß der Erfindung den grundsätzlichen Vorteil der geringeren Anzahl von Schichten auf. Dies ist sowohl hinsichtlich der Investitionen für die Vorrichtung zum Herstellen derartiger Behälter als auch für den Betrieb einer solchen Vorrichtung kostengünstiger, zumal die im Vergleich zu bekannten Beälter eingesparte fünfte Schicht eine Schicht aus Haftvermittler ist, der aus verhältnismäßig teurem Material besteht. Trotz der Tatsache, daß der Behälter gemäß der Erfindung aus nur vier Schichten besteht, weist er eine bessere Transparenz und weist ein gefälligeres Äußeres auf, da die Polyamidschicht dem Behälter einen gewissen Glanz verleiht.

Ein weiterer Vorteil gegenüber dem bekannten fünfschichtigen Behälter zeigt sich bei der Dampfsterilisation. Polyolefine weisen bei Normaltemperatur eine sehr gute Diffusionsdichte gegenüber Wasserdampf auf. Diese Eigenschaft geht aber bei höheren Temperaturen, wie sie bei der Dampfsterilisation erforderlich sind, weitgehend verloren, so daß das die Sperrschicht bildende Material erhebliche Feuchtigkeitsmengen aufnimmt, die mehr als 10% betragen können. Mit dem Abkühlen des Behälters kehrt die Diffusionsdichte der Polyolefinschicht gegenüber Wasserdapf zurück mit dem Ergebnis, daß die in der Sperrschicht befindliche Feuchtigkeit, die während des Sterilisationsvorganges durch die Polyolefinschicht hindurchdiffundiert war, in der Sperrschicht eingeschlossen bleibt. Dies ist deshalb nachteilig, weil bei hohem Feuchtigkeitsgehalt die guten Sperreigenschaften des EVOH in starkem Maße verloren gehen. Bei der gemäß der Erfindung vorgesehenen Kombination von einer äußeren, direkt auf der EVOH-Schicht angeordneten Schicht aus Polyamid kann die bei der Sterilisation von der Sperrschicht aufgenommene Feuchtigkeit sehr schnell nach außen entweichen, so daß nach kurzer Zeit, beispielsweise 24 h, der vor der Sterilisation vorhanden gewesene Zustand wieder eintritt.

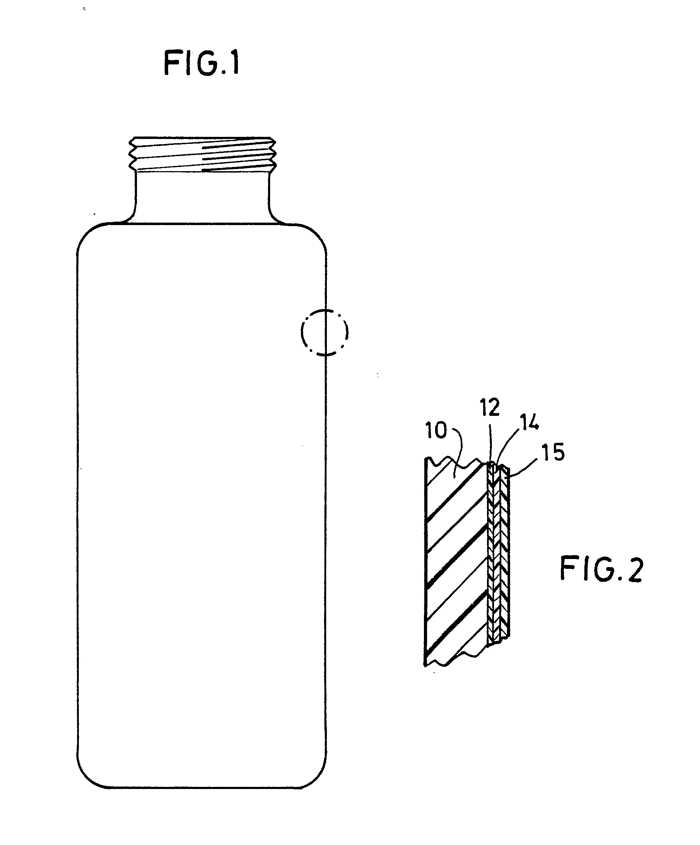

In der Zeichnung ist als Ausführungsbeispiel der Erfindung eine Flasche dargestellt. Der in stark vergrößertem Maßstab dargestellte Ausschnitt aus der Wandung der Flasche läßt die innere Schicht 10 aus einem Polyolefin erkennen, die außenseitig eine Schicht 12 aus einem der Haftvermittlung dienenden Material trägt. Die Haftvermittlerschicht 12 ist außenseitig mit der Barriereschicht 14 beschichtet, die außenseitig die Polyamidschicht 15 trägt. Die Verteilung der Gesamtwanddicke der Flasche auf die einzelnen Schichten kann beispielsweise so gewählt sein, daß die Polyolefinschicht 10 etwa 80% der gesamten Wanddicke bildet und die restlichen 20% der Wanddicke sich auf die anderen drei Schichten verteilen. Die Schnittdarstellung in der Zeichnung ist demzufolge nicht maßstabgerecht.

## Ansprüche

1. Im Extrusions-Blasverfahren hergestellter mehrschichtiger Behälter aus Kunststoff mit einer im wesentlichen aus aus Polyolefin bestehenden Innenschicht sowie einer über eine Haftvermittlerschicht mit der Polyolefinschicht verbundenen Barriereschicht aus EVOH (Ethylenvinylalkohol), dadurch gekennzeichnet, daß die EVOH-Schicht mit einer äußeren Schicht aus Polyamid direkt verbunden ist.

2. Behälter gemäß Anspruch 1, dadurch gekennzeichnet, daß die Innenschicht aus Polypropylen besteht.

# FIG.1

# FIG.2

10  12  14  15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 006 108 (TOYO SEIKAN KAISHA) * Ansprüche 1,2,4,6; Seite 1, Zeile 57 - Seite 2, Zeile 55; Seite 7, Zeilen 34-44; Beispiele 1,2; Figur 3 * | 1,2 | B 32 B 27/08 B 65 D 1/02 |
| X | GB-A-2 048 775 (AMERICAN CAN CO.) * Ansprüche 1-6; Seite 1, Zeile 60 - Seite 3, Zeile 97; Figuren 1,2 * | 1,2 | |

RECHERCHIERTE SACHGEBIETE (Int. Cl.4)

B 32 B
B 65 D

Der vorliegende Recherchenbericht wurde für alle Patentansprüche erstellt

| Recherchenort | Abschlußdatum der Recherche | Prüfer |
|---|---|---|
| DEN HAAG | 02-12-1987 | BLASBAND I. |